# EUROPEAN PATENT APPLICATION

(11) **EP 2 262 211 A1**
(43) Date of publication of application: **15.12.2010**
(21) Application number: 10163361.8
(22) Date of filing: 20.05.2010
(51) Int. Cl.: H04M 1/725, H04M 1/02

(54) **Portable terminal apparatus, communication control method, and communication control program**

(30) Priority: 11.06.2009 JP 2009140146
(71) Applicant: FUJITSU LIMITED, Kawasaki-shi, Kanagawa 211-8588 (JP)
(72) Inventor: Tomohara, Fumiyoshi, Kawasaki-shi, Kanagawa 211-8588 (JP); Sato, Kazuyuki, Kawasaki-shi, Kanagawa 211-8588 (JP); Kuranari, Shinichi, Kawasaki-shi, Kanagawa 211-8588 (JP)
(74) Representative: Stebbing, Timothy Charles

(57) **Abstract**

A portable terminal apparatus (1) includes a first enclosure (1a), a second enclosure (1b), and a control unit (1c). The second enclosure (1b) takes any of a plurality of configurations with respect to the first enclosure (1a) including a first form and a second form. The second enclosure (1b) is closed over the first enclosure (1a) in the case of the first form. The second enclosure is separated from the first enclosure in the case of the second form. In the case of the first form, the control unit (1c) controls communication to be performed between the first enclosure and the second enclosure via a contact between the first enclosure and the second enclosure. In the case of the second form, the control unit (1c) controls communication to be performed between the first enclosure and the second enclosure by a radio communication unit.

## Description

The present invention relates to a portable terminal apparatus, a communication control method, and a communication control program.

At present, the processing capability of portable terminal apparatus, such as portable telephones, is improving and they have many functions. Some portable terminal apparatus can be used for performing various kinds of information processing including a voice call, document preparation, access to a website, electronic mail sending and receiving, and video playback. In addition, there are portable terminal apparatus which take various modified forms, so users can use these functions easily.

For example, there may be a portable terminal apparatus in which two enclosures (housing halves) are included and in which one enclosure can be slid on the other enclosure. With some slidable portable terminal apparatus, first and second enclosures are included and a position to which the second enclosure is slid on the first enclosure can be detected by a magnetic sensor.

In addition, there may be a portable terminal apparatus in which two enclosures are included and in which one enclosure can be separated from the other enclosure. With some separable portable terminal apparatus, a display enclosure having a display section and a pad enclosure having an imaging section are included and radio communication is performed between the display enclosure and the pad enclosure. Moreover, there is a mobile terminal in which a first enclosure having a display section and a second enclosure having an input section are included and in which radio communication is performed between the first enclosure and the second enclosure.

See, for example, Japanese Laid-open Patent Publication No. 2007-274727, Japanese Laid-open Patent Publication No. 2007-165960, or US Published Patent Application No. 2005/0124381.

With the above separable portable terminal apparatus, however, only nondirectional radio communication methods are used for performing radio communication between the two enclosures. Accordingly, radio waves reach an unnecessary area. This may cause, for example, a security problem, such as leakage of information, or interference to other electronic devices.

The present invention was made under the background circumstances described above. Embodiments of the present invention may provide a portable terminal apparatus, a communication control method, and a communication control program which can properly control communication between enclosures.

According to an aspect of the present invention, a portable terminal apparatus includes a first enclosure; a second enclosure which takes different forms (configurations or states) with respect to the first enclosure, including a first form and a second form, the second enclosure being closed over (stacked on or folded to be closed against) the first enclosure in the case of the first form, the second enclosure being separated from the first enclosure in the case of the second form; and a control unit which controls, in the case of the first form, communication to be performed between the first enclosure and the second enclosure via a contact between the first enclosure and the second enclosure and so that, in the case of the second form, communication to be performed between the first enclosure and the second enclosure by a radio communication unit.

Reference is made, by way of example only, to the accompanying drawings in which:
FIG. 1 illustrates a portable terminal apparatus according to a first embodiment;
FIG. 2 illustrates the entire structure of a communication system;
FIGS. 3A, 3B, and 3C illustrate the appearance of a portable telephone according to a second embodiment;
FIGS. 4A and 4B illustrate the appearance of the portable telephone according to the second embodiment which is in a separated state;
FIG. 5 is a block diagram of hardware which makes up the portable telephone according to the second embodiment;
FIGS. 6A, 6B and 6C illustrate a change in the state of the portable telephone according to the second embodiment;
FIG. 7 is a functional block diagram of the portable telephone according to the second embodiment;
FIG. 8 is a flow chart of communication control exercised by the portable telephone according to the second embodiment;
FIGS. 9A and 9B illustrate the appearance of a portable telephone according to a third embodiment which is in a separated state;
FIG. 10 is a block diagram of hardware which makes up the portable telephone according to the third embodiment;
FIGS. 11A, 11B and 11C illustrate a change in the state of the portable telephone according to the third embodiment;
FIG. 12 is a block diagram of the functions of the portable telephone according to the third embodiment;
FIG. 13 is a flow chart of communication control exercised by the portable telephone according to the third embodiment;
FIGS. 14A, 14B, and 14C illustrate the appearance of a portable telephone according to a fourth embodiment;
FIGS. 15A and 15B illustrate the appearance of the portable telephone according to the fourth embodiment which is in a separated state;
FIG. 16 is a block diagram of hardware which makes up a portable telephone according to a fifth embodiment; and
FIGS. 17A, 17B, and 17C illustrate a method for detecting the state of a portable telephone according to a sixth embodiment.

Embodiments will now be described in detail with reference to the accompanying drawings, wherein like reference numerals refer to like elements throughout.

### (First Embodiment)

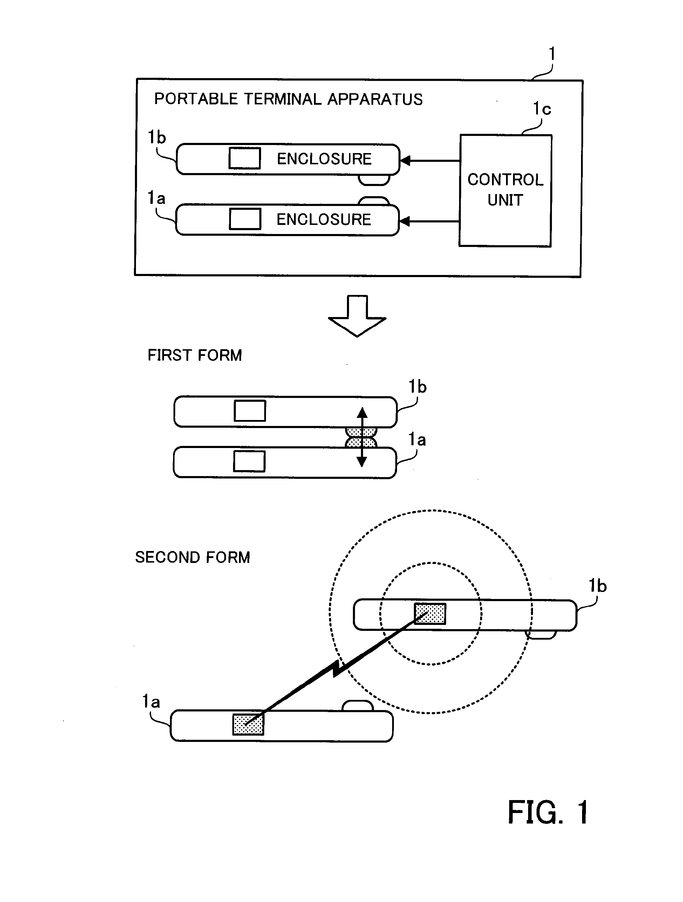

Fig. 1 illustrates a portable terminal apparatus according to a first embodiment. For example, a portable terminal apparatus 1 according to a first embodiment may be an electronic device, such as a portable telephone, a portable game machine, or an electronic dictionary, or an information processing unit, such as a notebook computer or a PDA (Personal Digital Assistant).

The portable terminal apparatus 1 includes enclosures 1a and 1b. The enclosure 1b (second enclosure) can be separated from the enclosure 1a (first enclosure) and takes modified forms including a first form and a second form. Here, the term "form" refers to a particular state or configuration of the same enclosure. In the case of the first form, the enclosure 1b is closed over the enclosure 1a. That is to say, the enclosures 1a and 1b are stacked one on another to overlap in the direction of the thickness. However, it is not necessary that the top (right edge in FIG. 1A) of the enclosure 1a should be aligned with the top (right edge in FIG. 1A) of the enclosure 1b or that the bottom (left edge in FIG. 1A) of the enclosure 1a should be aligned with the bottom (left edge in FIG. 1A) of the enclosure 1b. In the case of the second form, the enclosure 1b is physically separated from the enclosure 1a.

In addition, the portable terminal apparatus 1 includes a control unit 1c. For example, the control unit 1 is in the enclosure 1 or 1b. In the case of the first form, the control unit 1 exercises control so that communication will be performed between the enclosures 1a and 1b via a contact therebetween. Alternatively, the control unit 1c exercises control so that communication will be performed between the enclosures 1a and 1b by a directional radio communication method. In the case of the second form, on the other hand, the control unit 1c exercises control so that communication will be performed between the enclosures 1a and 1b by a nondirectional (omni-directional) radio communication method.

To perform communication between the enclosures 1a and 1b via the contact, contact terminals, for example, may be arranged on the enclosures 1a and 1b. To perform directional radio communication, communication units, for example, for performing directional communication may be arranged in the enclosures 1a and 1b. To perform nondirectional radio communication, communication units, for example, for performing nondirectional communication may be arranged in the enclosures 1a and 1b.

Infrared communication, RFID (Radio Frequency Identification), or the like can be used as a directional radio communication method. Bluetooth (registered trademark), Zigbee, Wireless USB (Universal Serial Bus), radio LAN (Local Area Network), or the like can be used as a nondirectional radio communication method.

It may be possible to slide the enclosure 1b on the enclosure 1a. That is to say, the enclosure 1b may take modified forms including the first form, the second form, and a third form. In the case of the third form, the enclosure 1b is slid on the enclosure 1a. In this case, the control unit 1c may exercise control so that communication will be performed between the enclosures 1a and 1b via the contact therebetween. Alternatively, the control unit 1c may exercise control so that communication will be performed between the enclosures 1a and 1b by a directional radio communication method. This is the same with the first form.

For example, a plurality of connection terminals may be arranged on at least one of the enclosures 1a and 1b so that communication can be performed between the enclosures 1a and 1b via the contact both in the case of the first form and in the case of the third form. As an example, a connection terminal #1 is arranged on the enclosure 1a and connection terminals #2 and #3 are arranged on the enclosure 1b. The connection terminal #1 touches the connection terminal #2 in the case of the first form. The connection terminal #1 touches the connection terminal #3 in the case of the third form.

In addition, for instance, a plurality of radio ports (infrared ports, for example) may be arranged on at least one of the enclosures 1a and 1b so that directional communication can be performed between the enclosures 1a and 1b both in the case of the first form and in the case of the third form. As an example, a radio port #1 is arranged on the enclosure 1a and radio ports #2 and #3 are arranged on the enclosure 1b. The radio port #1 is opposite to the radio port #2 in the case of the first form. The radio port #1 is opposite to the radio port #3 in the case of the third form.

The control unit 1c may select communication via the contact, a directional radio communication method, or a nondirectional radio communication method with not only a form but also a communication type taken into consideration. For example, if audio data or a key operation signal is transmitted, a nondirectional radio communication method may be selected even in the case of the first form or in the case of the third form.

The modified forms including the first through third forms can be detected by, for example, a method utilizing magnetism. In this case, a magnet may be arranged on one of the enclosures 1a and 1b and a magnetic sensor may be arranged on the other. Alternatively, the modified forms including the first through third forms may be detected on the basis of whether communication can be performed by a directional radio communication method.

With the above portable terminal apparatus 1, the enclosure 1b takes the modified forms including the first form and the second form. In the case of the first form, the enclosure 1b is closed over the enclosure 1a. In the case of the second form, the enclosure 1b is separated from the enclosure 1a. In the case of the first form, the control unit 1c exercises control so that communication will be performed between the enclosures 1a and 1b via the contact therebetween or so that communication will be performed between the enclosures 1a and 1b by a directional radio communication method. In the case of the second form, the control unit 1c exercises control so that communication will be performed between the enclosures 1a and 1b by a nondirectional radio communication method.

As a result, a method by which communication is performed between the enclosures 1a and 1b is controlled properly according to the form of the enclosure 1b. Unlike the case where communication is performed between the enclosures 1a and 1b only by a nondirectional radio communication method, this prevents radio waves from reaching an unnecessary area. Accordingly, the risk of leakage of the contents of communication or the possibility of causing interference to other electronic devices can be avoided.

In addition, by adopting communication via the contact or a directional radio communication method, communication can be performed stably between the enclosures 1a and 1b and electric power consumed because of communication can be reduced. These communication methods are useful, for example, in the case where a control command for diagnosis is issued from the outside for the maintenance of the portable terminal apparatus 1 or where software for controlling the portable terminal apparatus 1 is rewritten, especially in the case where it is necessary to avoid communication failure.

If a directional radio communication method is adopted, there is provided a portable terminal apparatus including a first enclosure, a second enclosure which takes modified forms including a first form and a second form, and a control unit, the second enclosure being closed over the first enclosure in the case of the first form, the second enclosure being separated from the first enclosure in the case of the second form, the control unit controlling, in the case of the first form, communication to be performed between the first enclosure and the second enclosure by a directional radio communication method and, in the case of the second form, communication to be performed between the first enclosure and the second enclosure by a nondirectional radio communication method.

In addition, a third form may be included in the modified forms which the second enclosure of this portable terminal apparatus takes. In the case of the third form, the second enclosure is slid on the first enclosure from the first form. In the case of the third form, the control unit controls communication to be performed between the first enclosure and the second enclosure by a directional radio communication method. Furthermore, the first enclosure may have a first radio communication port and the second enclosure may have second and third radio communication ports. In the case of the first form, the control unit controls communication to be performed between the first radio communication port and the second radio communication port. In the case of the third form, the control unit controls communication to be performed between the first radio communication port and the third radio communication port.

The control unit may control a determined kind of communication to be performed by a nondirectional radio communication method even in the case of the first form. A directional radio communication method may be an infrared communication method. In addition, the first enclosure may contain a magnetic material and the second enclosure may have a magnetic sensor. In this case, the control unit determines according to a situation in which the magnetic sensor detects the magnetic material whether the first enclosure and the second enclosure are separated.

In the following second through sixth embodiments a portable telephone will be taken as an example to which the portable terminal apparatus 1 according to the first embodiment is applied. As stated above, however, the portable terminal apparatus 1 can be applied to various other electronic devices.

### (Second Embodiment)

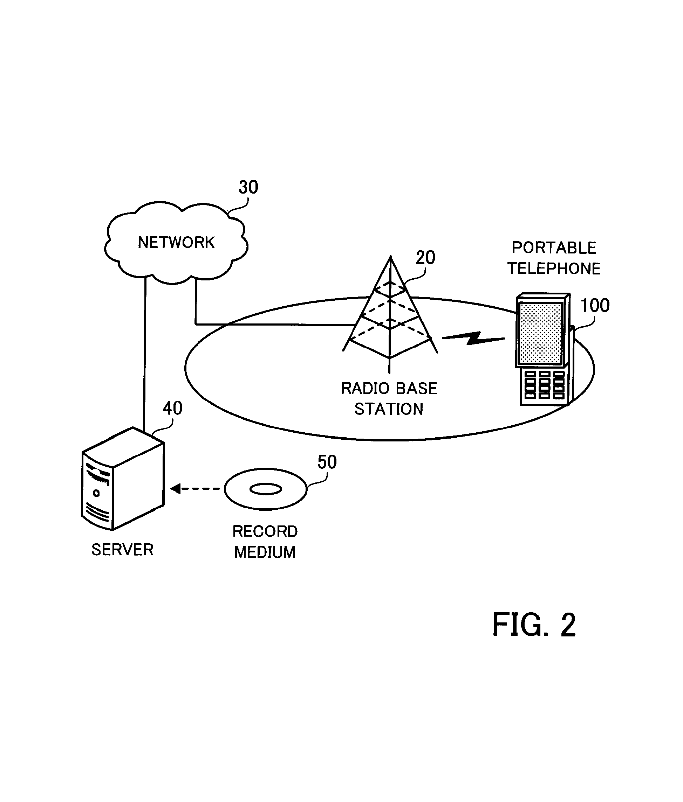

FIG. 2 illustrates the entire structure of a communication system. A communication system according to the second embodiment includes a portable telephone 100, a radio base station 20, a network 30, and a server 40. The radio base station 20 and the server 40 are connected to the network 30.

The portable telephone 100 is a mobile radio apparatus having a radio call function and a radio data communication function and is an example of the portable terminal apparatus 1 according to the first embodiment. The portable telephone 100 can perform radio communication with the radio base station 20 in its coverage area (cell).

The radio base station 20 is a radio communication unit which can communicate with a mobile radio unit in its coverage area. The radio base station 20 sets a radio link with the portable telephone 100. The radio base station 20 then transmits data received from the portable telephone 100 to the network 30 and transmits data which is received from the network 30 and the destination of which is the portable telephone 100 to the portable telephone 100.

The server 40 is an information processing unit which controls the update (version-up, for example) of a control program installed on the portable telephone 100. When the server 40 acquires a new control program, the server 40 stores the new control program in a storage unit thereof. The server 40 then gives the portable telephone 100 via the network 30 and the radio base station 20 notice to the effect that the new control program resides. When the server 40 later receives a response from the portable telephone 100 to indicate the beginning of update, the server 40 sends the new control program stored in the storage unit to the portable telephone 100 via the network 30 and the radio base station 20.

Such a program can be recorded on a computer readable record medium 50 and be distributed. The server 40 can read out the program from the record medium 50 and copy the program into its storage unit. Instead of receiving the program by radio communication, the portable telephone 100 may receive the program from an information processing unit (not illustrated) which holds the program by wired communication. Such an information processing unit can acquire the program from the record medium 50. This is the same with the server 40.

A magnetic recording device, an optical disc, a magneto-optical recording medium, a semiconductor memory, or the like can be used as the record medium 50. A magnetic recording device may be an HDD (hard disk drive), an FD (Flexible Disc), a magnetic tape, or the like. An optical disc may be a CD (Compact Disc), CD-R(Recordable)/RW(ReWritable), a DVD (Digital Versatile Disc), a DVD-R/RW/RAM(Random Access Memory), or the like. A magneto-optical recording medium may be an MO (Magneto-Optical disk) or the like.

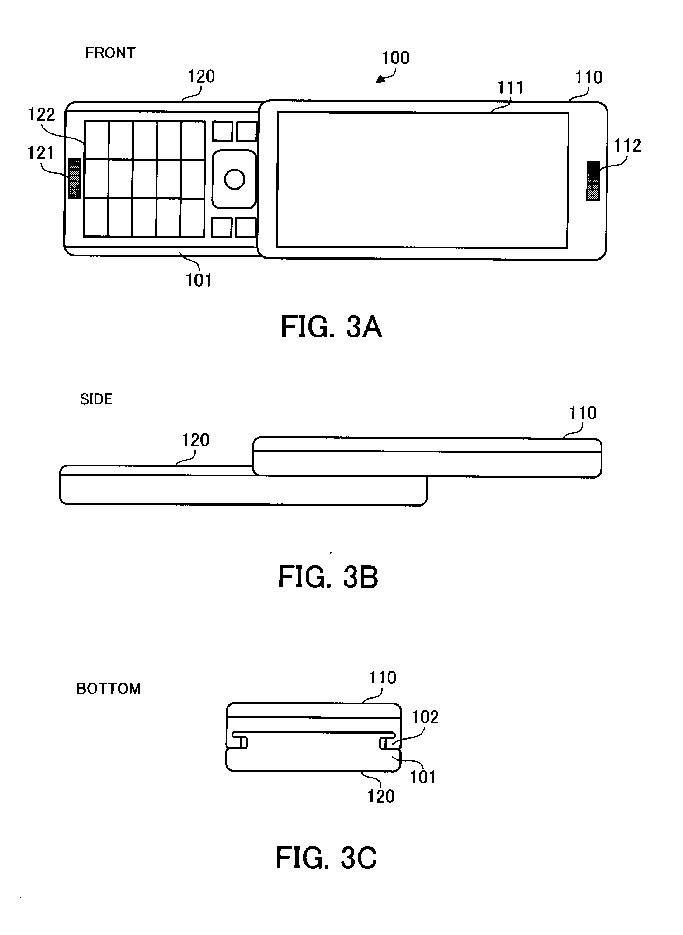

FIGS. 3A, 3B, and 3C illustrate the appearance of a portable telephone according to a second embodiment. A portable telephone 100 includes a movable section 110 and a main section 120. The movable section 110 is an example of the enclosure 1b of the portable terminal apparatus 1 according to the first embodiment. The main section 120 is an example of the enclosure 1a of the portable terminal apparatus 1 according to the first embodiment.

The movable section 110 overlaps with the front side of the main section 120. The length (height) and width of the movable section 110 are almost the same as the height and width, respectively, of the main section 120. In the housed state (first form), the top of the movable section 110 is almost aligned with the top of the main section 120 and the bottom of the movable section 110 is almost aligned with the bottom of the main section 120. The movable section 110 can be slid along the length of the main section 120 and stops at a determined position. FIGS. 3A, 3B, and 3C illustrate the slid state (third form). In the slid state the main section 120 overlaps with the movable section 110 by about half of the height.

The movable section 110 has a display 111 and a speaker 112 on the front. The main section 120 has a microphone 121 and a keypad 122 on the front. The keypad 122 has a plurality of input keys. In the housed state, the keypad 122 is covered with the movable section 110 and is not exposed. In the slid state part of the keypad 122 is exposed.

The movable section 110 slides, so the main section 120 has concave guide rail portions 101 on the front. The guide rail portions 101 are formed in a left edge portion (upper side in FIG. 3A) and a right edge portion (lower side in FIG. 3A) of the front in the sliding direction. In addition, the movable section 110 has protrudent frame portions 102 on the back. The frame portions 102 are formed in a left edge portion and a right edge portion of the back in the sliding direction. This is the same with the guide rail portions 101. FIG. 3C illustrates the shape of the portable telephone 100 as seen from the left in FIG. 3A. The guide rail portions 101 engage the frame portions 102, so the movable section 110 can be slid.

In the example illustrated in FIGS. 3A, 3B, and 3C, the movable section 110 can be slid along its length. However, the movable section 110 may be slid along its width. In this case, guide rail portions and frame portions should be formed near the bottom (left side in FIG. 3A) and the top (right side in FIG. 3A). In addition, the movable section 110 may be slid both along its length and along its width. In this case, guide rail portions and frame portions necessary for sliding the movable section 110 along its length and guide rail portions and frame portions necessary for sliding it along its width should be formed.

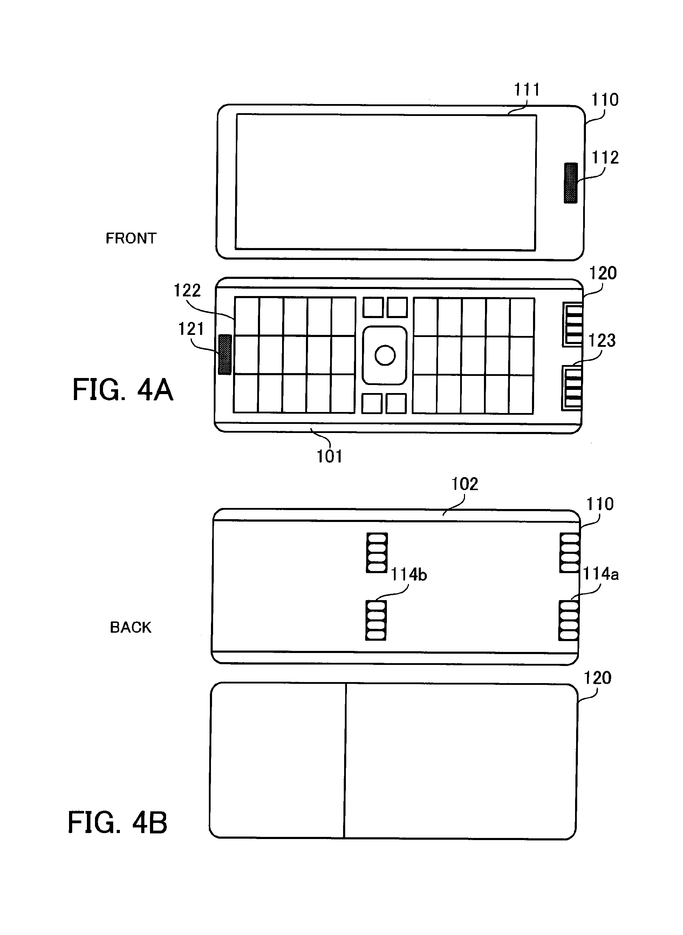

FIGS. 4A and 4B illustrate the appearance of the portable telephone according to the second embodiment which is in a separated state. A user can put the movable section 110 into the separated state (second form) by sliding the movable section 110 further from the slid state illustrated in FIGS. 3A, 3B, and 3C so as to separate the movable section 110 from the main section 120. However, the movable section 110 may be changed directly from the housed state to the separated state.

The movable section 110 has contact pads 114a and 114b on the back. The contact pads 114a and 114b include connection terminals used for performing contact communication (or non-radio communication) with the main section 120. The contact pad 114a is placed at the edge near the top (right side in FIG. 4A). The contact pad 114b is placed near the middle of the length of the movable section 110. The main section 120 has a contact pad 123 on the front. The contact pad 123 includes connection terminals used for performing contact communication with the movable section 110. The contact pad 123 is placed at the edge near the top.

When the connection terminals of the contact pad 114a touch the connection terminals of the contact pad 123, an electric current flows and communication can be performed between the movable section 110 and the main section 120. Similarly, when the connection terminals of the contact pad 114b touch the connection terminals of the contact pad 123, an electric current flows and communication can be performed between the movable section 110 and the main section 120. In the separated state the whole of the keypad 122 is exposed.

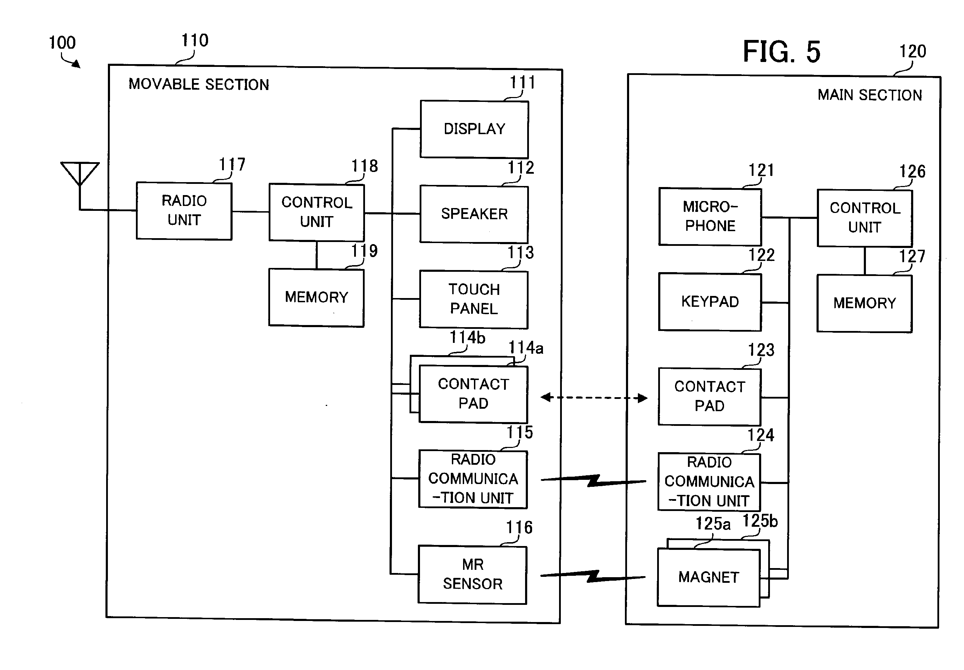

FIG. 5 is a block diagram of hardware which makes up the portable telephone according to the second embodiment. As stated above, the portable telephone 100 according to the second embodiment includes the movable section 110 and the main section 120. Contact communication or nondirectional radio communication can be performed between the movable section 110 and the main section 120.

In addition to the above display 111, speaker 112, contact pads 114a and 114b, the movable section 110 has a touch panel 113, a radio communication unit 115, an MR sensor 116, a radio unit 117, a control unit 118, and a memory 119.

The display 111 displays various kinds of images under the control of the control unit 118. A liquid crystal display, an organic EL (ElectroLuminescence) display, or the like can be used as the display 111. The display 111 is under the touch panel 113 and an image displayed by the display 111 can be seen from the front through the touch panel 113. Images to be displayed include a wait screen, an operation screen, text, and a content image.

The speaker 112 converts an electrical signal into a physical vibration and reproduces sound, under the control of the control unit 118. For example, when a user is talking over the portable telephone, a person's voice and background noise at the other end are outputted from the speaker 112.

The touch panel 113 detects touch operation by the user and outputs a position at which the touch panel 113 is touched to the control unit 118 as an input signal. Touch operation is performed by the use of a pointing device, such as a touch pen, or the user's finger. The user can perform touch operation on the touch panel 113 while viewing an image displayed by the display 111. A touch position can be detected by various methods including a matrix switch method, a resistance film method, a surface acoustic wave method, an infrared ray method, an electromagnetic induction method, and an electrostatic capacitance method. Any method can be adopted.

The contact pads 114a and 114b include the connection terminals used for performing contact communication with the main section 120. The contact pads 114a and 114b are arranged at different positions on the back of the movable section 110 so that contact communication can be performed both in the housed state and in the slid state. Preferably, the connection terminals slightly protrude from a surface on which the contact pads 114a and 114b are arranged so that the connection terminals can easily touch the connection terminals of the main section 120. When the contact pad 114a or 114b is touching the contact pad 123, the contact pad 114a or 114b performs communication under the control of the control unit 118.

The radio communication unit 115 performs radio communication with the main section 120 under the control of the control unit 118. The radio communication unit 115 uses a nondirectional radio communication method such as Bluetooth, Zigbee, Wireless USB, or radio LAN. If Bluetooth is used, a communication method which complies with the HID (Human Interface Device) profile can be adopted.

The MR sensor 116 detects a change in magnetic field by the use of an MR (MagnetoResistive) element and informs the control unit 118 of a detection result. The MR sensor 116 detects magnetic fields from magnets of the main section 120. As a result, the control unit 118 can determine whether the movable section 110 is separated from the main section 120.

The radio unit 117 performs radio signal processing under the control of the control unit 118 and performs radio communication with the radio base station 20. To be concrete, the radio unit 117 demodulates and decodes a signal received via an antenna of the movable section 110, and outputs received data obtained to the control unit 118. In addition, the radio unit 117 codes and modulates data to be sent acquired from the control unit 118, and outputs the obtained signal to be sent via the antenna. Data sent and received by the radio unit 117 includes voice data, image data, text data, and control information. In addition, data received by the radio unit 117 includes a new version of a control program.

The control unit 118 controls the whole of the portable telephone 100. The control unit 118 can be realized by, for example, a CPU (Central Processing Unit) and a RAM. The CPU reads out a program or data from the memory 119, puts the program or the data in the RAM, and executes the program. The RAM is a volatile memory and temporarily stores at least part of the program or the data. A memory of another kind may be used in place of the RAM. Control by the control unit 118 includes communication control, voice input-output control, key operation control, control program update, and control command execution for operating state diagnosis.

The memory 119 is a nonvolatile memory and stores the program or the data used by the control unit 118. For example, a flash memory can be used as the memory 119. The control unit 118 reads out the program or the data stored in the memory 119 or writes data to the memory 119.

In addition to the above microphone 121, keypad 122, and contact pad 123, the main section 120 has a radio communication unit 124, magnets 125a and 125b, a control unit 126, and a memory 127.

The microphone 121 converts a physical vibration generated by sound into an electrical signal, accepts voice input, and outputs the voice input to the control unit 118 via the control unit 126. For example, when the user is talking over the portable telephone, the user's voice and background noise are inputted from the microphone 121.

The keypad 122 includes a plurality of input keys. Preferably, the keypad 122 includes 26 (corresponding to the 26 alphabetic characters) or more input keys so that the keypad 122 can function as what is called a QWERTY keyboard (which is also referred to as a full keyboard). When an input key is pressed down, the keypad 122 outputs an input signal indicative of the input key pressed down to the control unit 118 via the control unit 126. The control unit 126 may dynamically change assignment of characters to the input keys according to the form of the movable section 110.

The contact pad 123 includes the connection terminals used for performing contact communication with the movable section 110. When the contact pad 123 is touching the contact pad 114a or 114b, the contact pad 123 performs communication under the control of the control unit 126.

The radio communication unit 124 performs radio communication with the movable section 110 under the control of the control unit 126. The radio communication unit 124 uses a nondirectional radio communication method such as Bluetooth, Zigbee, Wireless USB, or radio LAN. This is the same with the radio communication unit 115.

The magnets 125a and 125b are magnetic materials which cause magnetic fields. The magnets 125a and 125b are arranged at different positions in the main section 120 so that the MR sensor 116 can detect a magnetic field both in the housed state and in the slid state.

The control unit 126 controls the operation of the main section 120 under the control of the control unit 118. The control unit 126 can be realized by a CPU and a RAM. This is the same with the control unit 118. The CPU reads out a program or data from the memory 127, puts the program or the data in the RAM, and executes the program. The RAM is a volatile memory and temporarily stores at least part of the program or the data. A memory of another kind may be used in place of the RAM. Control by the control unit 126 includes communication control, voice input control, key operation control, control program update, and control command execution for operating state diagnosis.

The memory 127 is a nonvolatile memory and stores the program or the data used by the control unit 126. For example, a flash memory can be used as the memory 127. The control unit 126 reads out the program or the data stored in the memory 127 or writes data to the memory 127.

With the portable telephone 100 according to the second embodiment, as illustrated in FIG. 5, the movable section 110 with the display 111 has the function of performing communication with the radio base station 20. This brings the advantage of avoiding the necessity of ensuring bandwidth corresponding to data size between the movable section 110 and the main section 120 even in the case of receiving a large amount of data, such as dynamic image data, from the radio base station 20 and displaying it. However, if there is sufficiently wide communication bandwidth between the movable section 110 and the main section 120, then the main section 120 may perform communication with the radio base station 20.

The control unit 126 of the main section 120 may not be equal in processing capability to the control unit 118 of the movable section 110. For example, the operation capability of the CPU of the control unit 126 may be below that of the CPU of the control unit 118. In addition, as illustrated in FIG. 5, the movable section 110 has the two contact pads 114a and 114b and the main section 120 has the one contact pad 123. However, the movable section 110 and the main section 120 may have one contact pad and two contact pads respectively. In addition, the movable section 110 has the MR sensor 116 and the main section 120 has the two magnets 125a and 125b. Conversely, however, the movable section 110 and the main section 120 may have two magnets and an MR sensor respectively.

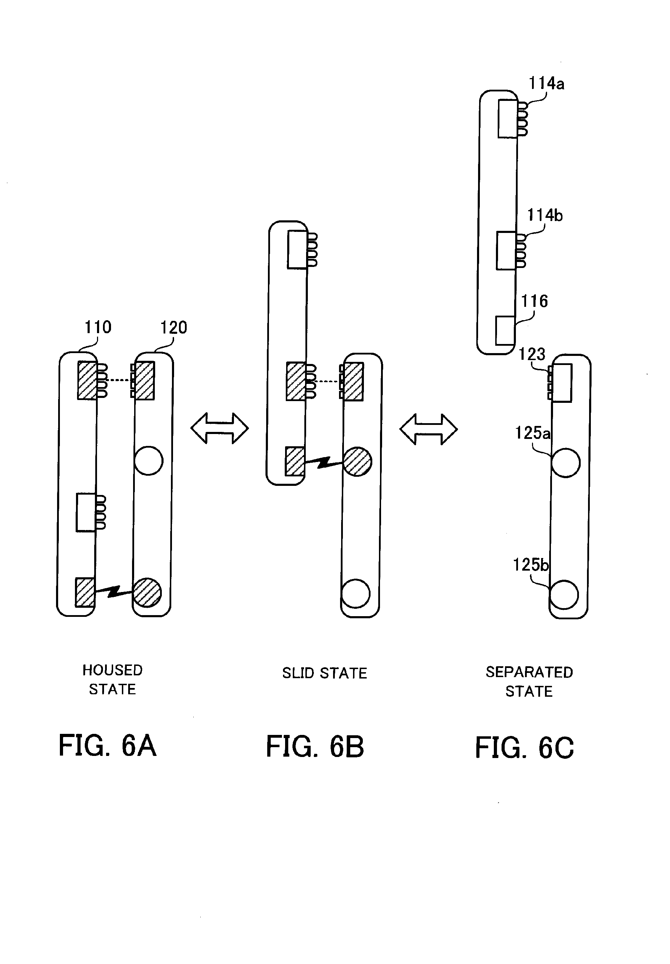

FIGS. 6A, 6B and 6C illustrate a change in the state of the portable telephone according to the second embodiment. FIGS. 6A, 6B and 6C illustrate the state of the portable telephone 100 as seen from the right side (lower side in FIG. 3A). In the housed state (FIG. 6A) the whole of the back of the movable section 110 is opposite to the whole of the front of the main section 120. In the slid state (FIG. 6B) part of the back of the movable section 110 is opposite to part of the front of the main section 120. In the separated state (FIG. 6C) the whole of the front of the main section 120 is exposed.

In the housed state the contact pad 114a of the movable section 110 is opposite to and touches the contact pad 123 of the main section 120. As a result, contact communication can be performed between the movable section 110 and the main section 120 via the contact pads 114a and 123. In the housed state the MR sensor 116 of the movable section 110 is opposite to the magnet 125b of the main section 120. Accordingly, the MR sensor 116 detects a magnetic field from the magnet 125b and the fact that the movable section 110 is not separated from the main section 120 comes out.

In the slid state the contact pad 114b of the movable section 110 faces and touches the contact pad 123 of the main section 120. As a result, contact communication can be performed between the movable section 110 and the main section 120 via the contact pads 114b and 123. In the slid state the MR sensor 116 of the movable section 110 faces the magnet 125a of the main section 120. Accordingly, the MR sensor 116 detects a magnetic field from the magnet 125a and the fact that the movable section 110 is not separated from the main section 120 comes out. It is possible to distinguish between the housed state and the slid state by detecting which of the contact pads 114a and 114b is used for performing contact communication.

In the separated state neither the contact pad 114a nor 114b of the movable section 110 touches the contact pad 123 of the main section 120. As a result, contact communication is not performed between the movable section 110 and the main section 120. In the separated state the MR sensor 116 of the movable section 110 is opposite to neither the magnet 125a nor 125b of the main section 120. Accordingly, the MR sensor 116 does not detect a magnetic field and the fact that the movable section 110 is separated from the main section 120 comes out.

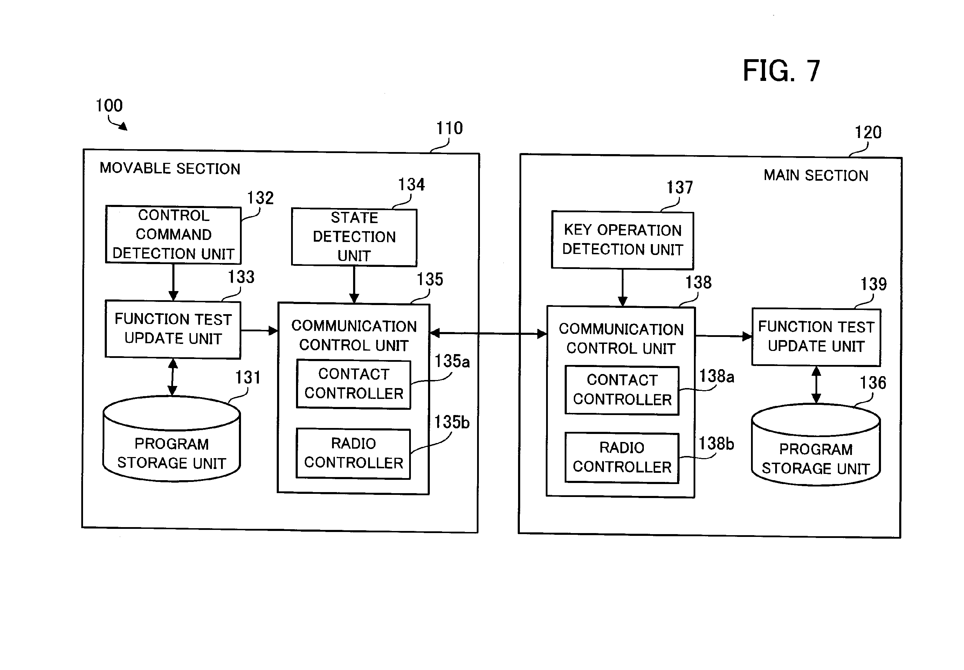

FIG. 7 is a functional block diagram of the portable telephone according to the second embodiment. Each of the movable section 110 and the main section 120 executes a program. By doing so, the functions illustrated in FIG. 7 are realized in the portable telephone 100. However, all or part of these functions can be realized by dedicated hardware circuits.

The control unit 118 executes a program stored in the memory 119. By doing so, a program storage unit 131, a control command detection unit 132, a function test update unit 133, a state detection unit 134, and a communication control unit 135 are realized in the movable section 110.

The program storage unit 131 stores a control program for controlling the movable section 110 and control data used for performing a control process. A storage area as the program storage unit 131 is ensured in, for example, the RAM by the CPU. The control program and the control data stored in the memory 119 are copied at need to the program storage unit 131. In addition, if the control program or the control data stored in the program storage unit 131 is updated, the update is reflected in the memory 119.

The control command detection unit 132 detects a control command for diagnosis inputted from the outside. The control command for diagnosis is used for determining whether the movable section 110 and the main section 120 are operating normally, that is to say, whether a hardware failure or a software failure has occurred. The control command for diagnosis is inputted from an external information processing unit via a connector for wired connection (not illustrated) at the time of, for example, manufacturing or maintaining the portable telephone 100. When the control command detection unit 132 detects the control command for diagnosis, the control command detection unit 132 informs the function test update unit 133 about the control command for diagnosis. When the control command detection unit 132 acquires a test result from the function test update unit 133, the control command detection unit 132 transmits the test result to the external information processing unit which issued the command.

When the function test update unit 133 receives the notice from the control command detection unit 132, the function test update unit 133 tests a state in which the movable section 110 is operating (state in which one or both of hardware and software are operating). In addition, the function test update unit 133 gives the communication control unit 135 instructions to send the control command to the main section 120. The function test update unit 133 then informs the control command detection unit 132 about the test result on the movable section 110 and a test result acquired from the main section 120 in the block.

Moreover, when the function test update unit 133 acquires control information indicative of the presence of a new version of the control program from the radio base station 20, the function test update unit 133 determines whether to update the control program immediately. If the function test update unit 133 determines that it should update the control program immediately, then the function test update unit 133 acquires the control program from the server 40. If a part of the control program acquired is to be executed by the movable section 110, then the function test update unit 133 updated the control program stored in the program storage unit 131. If a part of the control program acquired is to be executed by the main section 120, then the function test update unit 133 gives the communication control unit 135 instructions to send the control program to the main section 120.

The state detection unit 134 detects which of the housed state, the slid state, and the separated state the movable section 110 is in at present. To be concrete, the state detection unit 134 distinguishes the separated state from the other states on the basis of the state of detection by the MR sensor 116. Furthermore, the state detection unit 134 distinguishes the housed state from the slid state on the basis of the state of contact of the contact pads 114a and 114b. The state detection unit 134 informs the communication control unit 135 about the present state of the movable section 110 detected.

The communication control unit 135 controls communication with the main section 120. When an event which causes communication with the main section 120 occurs, the communication control unit 135 refers to the present state of the movable section 110 and selects one of contact communication and nondirectional radio communication. That is, if a determined kind of communication (sending the control command or the control program to the main section 120, for example) which requires stability is performed, then the communication control unit 135 selects contact communication preferentially. On the other hand, if another kind of communication (receiving a voice signal or a key operation signal from the main section 120, for example) is performed, then it selects nondirectional radio communication.

The communication control unit 135 includes a contact controller 135a and a radio controller 135b. The contact controller 135a controls contact communication with the main section 120. The contact controller 135a checks whether communication can be performed via the contact pad 114a or 114b, and uses one of them which is touching the main section 120. The radio controller 135b controls nondirectional radio communication with the main section 120. When the movable section 110 begins communication, the contact controller 135a or the radio controller 135b requires the main section 120 to establish connection.

In the above description contact communication can be selected when the movable section 110 is in the housed state. Similarly, contact communication can be selected when the movable section 110 is in the slid state. Nondirectional radio communication is selected when the movable section 110 is in the separated state. Similarly, however, nondirectional radio communication may be selected when the movable section 110 is in the slid state.

The control unit 126 executes a program stored in the memory 127. By doing so, a program storage unit 136, a key operation detection unit 137, a communication control unit 138, and a function test update unit 139 are realized in the main section 120.

The program storage unit 136 stores a control program for controlling the main section 120 and control data used for performing a control process. A storage area as the program storage unit 136 is ensured in, for example, the RAM by the CPU. The control program and the control data stored in the memory 127 are copied at need to the program storage unit 136. In addition, if the control program or the control data stored in the program storage unit 136 is updated, the update is reflected in the memory 127.

The key operation detection unit 137 detects the pressing down of an input key of the keypad 122. The key operation detection unit 137 then gives the communication control unit 138 instructions to send the movable section 110 a key operation signal indicative of the input key pressed down.

The communication control unit 138 controls communication with the movable section 110. When an event which causes communication with the movable section 110 occurs, the communication control unit 138 selects one of contact communication and nondirectional radio communication. To be concrete, when the movable section 110 requires to establish connection, the communication control unit 138 selects a communication method used at that time. When the main section 120 begins communication (for example, when the main section 120 sends a voice signal or a key operation signal to the movable section 110), the communication control unit 138 selects nondirectional radio communication. However, if connection by contact communication has already been established or if the communication control unit 138 can recognize that the movable section 110 is in the housed or slid state, then the communication control unit 138 may select contact communication.

The communication control unit 138 includes a contact controller 138a and a radio controller 138b. The contact controller 138a controls contact communication with the movable section 110. The radio controller 138b controls nondirectional radio communication with the movable section 110. When the main section 120 begins communication, the radio controller 138b requires the movable section 110 to establish connection.

When the function test update unit 139 receives a control command from the movable section 110, the function test update unit 139 tests a state in which the main section 120 is operating (state in which one or both of hardware and software are operating). The function test update unit 139 then gives the communication control unit 138 instructions to send the movable section 110 a test result. In addition, when the function test update unit 139 acquires a new version of the control program from the movable section 110, the function test update unit 139 updates the control program in the program storage unit 136.

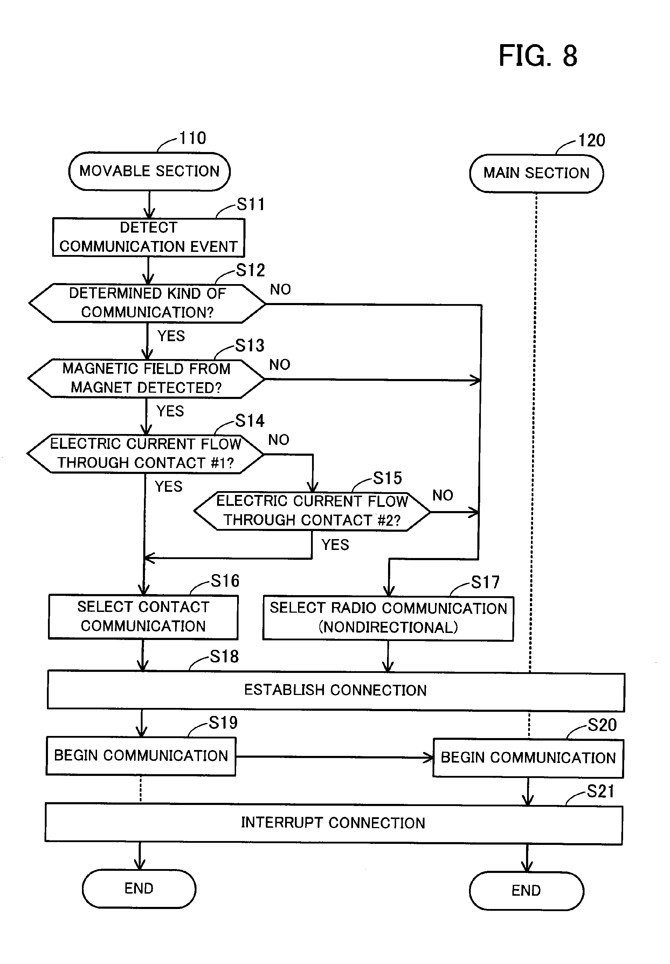

FIG. 8 is a flow chart of communication control exercised by the portable telephone according to the second embodiment. A control process illustrated in FIG. 8 will now be described in order of step number.

(Step S11) The communication control unit 135 detects an event which gives an opportunity to begin communication. Communication events include a request to the main section 120 to execute a control command, a request to update a control program of the main section 120, and a request from the main section 120 to establish connection.

(Step S12) The communication control unit 135 determines whether communication caused by the communication event detected in step S11 is a determined kind of communication which requires stability. The determined kind of communication includes sending a control command or a control program. If the communication caused by the communication event detected in step S11 is the determined kind of communication, then step S13 is performed next. If the communication caused by the communication event detected in step S11 is another kind of communication, then step S17 is performed next.

(Step S13) The state detection unit 134 determines whether a magnetic field from the magnet 125a or 125b is detected by the MR sensor 116. If a magnetic field from the magnet 125a or 125b is detected by the MR sensor 116, then step S14 is performed next. If a magnetic field from the magnet 125a or 125b is not detected by the MR sensor 116, then the state detection unit 134 determines that the movable section 110 is in the separated state. In this case, step S17 is performed next.

(Step S14) The state detection unit 134 determines whether the contact pad 114a is touching the contact pad 123, that is to say, whether an electric current is flowing between the movable section 110 and the main section 120. If the contact pad 114a is touching the contact pad 123, then the state detection unit 134 determines that the movable section 110 is in the housed state. In this case, step S16 is performed next. If the contact pad 114a is not touching the contact pad 123, then step S15 is performed next.

(Step S15) The state detection unit 134 determines whether the contact pad 114b is touching the contact pad 123, that is to say, whether an electric current is flowing between the movable section 110 and the main section 120. If the contact pad 114b is touching the contact pad 123, then the state detection unit 134 determines that the movable section 110 is in the slid state. In this case, step S16 is performed next. If the contact pad 114b is not touching the contact pad 123, then step S17 is performed next.

(Step S16) If the state detection unit 134 determines in step S14 that the movable section 110 is in the housed state, then the communication control unit 135 selects contact communication via the contact pad 114a. If the state detection unit 134 determines in step S15 that the movable section 110 is in the slid state, then the communication control unit 135 selects contact communication via the contact pad 114b. Step S18 is performed next.

(Step S17) The communication control unit 135 selects nondirectional radio communication via the radio communication unit 115. Step S18 is performed next.

(Step S18) The communication control unit 135 exercises control so that connection is established between the movable section 110 and the main section 120. If contact communication is selected in step S16, then the contact controllers 135a and 138a do a procedure for establishing the connection. If nondirectional radio communication is selected in step S17, then the radio controllers 135b and 138b do a procedure for establishing the connection.

(Step S19) The communication control unit 135 begins communication by the use of the connection established in step S18. For example, the communication control unit 135 sends a control command or a control program to the main section 120. In addition, the communication control unit 135 receives a voice signal or a key operation signal from the main section 120.

(Step S20) The communication control unit 138 begins communication by the use of the connection established in step S18. For example, the communication control unit 135 receives a control command or a control program from the main section 120. In addition, the communication control unit 135 sends a voice signal or a key operation signal to the main section 120.

(Step S21) When the communication ends (or when communication is not performed for a certain period of time), the communication control unit 135 exercises control so that the connection established in step S18 is interrupted. If contact communication is selected, then the contact controllers 135a and 138a do a procedure for interrupting the connection. If nondirectional radio communication is selected, then the radio controllers 135b and 138b do a procedure for interrupting the connection.

As has been described, if the movable section 110 is in the housed or slid state and the determined kind of communication is performed, then the movable section 110 selects contact communication. On the other hand, if the movable section 110 is in the separated state or another kind of communication is performed, then the movable section 110 selects nondirectional radio communication.

In the above description nondirectional radio communication is performed in the case of NO in step S13 or S15. In this case, however, communication may not be performed. That is to say, if communication, such as sending a control command or a control program, which requires stability is performed, only contact communication may be selected. In this case, the communication control unit 135 should inform a unit which makes a request corresponding to a communication event about failure in communication.

When sending a control command fails, the control command detection unit 132, for example, informs a unit which issued the control command about the failure. When sending a control program fails, the function test update unit 133, for example, informs the server 40 that update is not yet completed. The function test update unit 133 may acquire the control program after or before connection for contact communication is established between the movable section 110 and the main section 120. If the function test update unit 133 acquires the control program before connection for contact communication is established between the movable section 110 and the main section 120, the function test update unit 133 may temporarily hold the acquired control program until success in the contact communication.

Furthermore, the above steps S14 and S15 may be performed simultaneously. That is to say, the state detection unit 134 may check in parallel whether communication can be performed via the contact pad 114a and whether communication can be performed via the contact pad 114b. Moreover, even in the case of NO in the above step S13, the state detection unit 134 may check whether communication can be performed via the contact pad 114a or 114b. This is effective in the case where the movable section 110 can take the following form (such as where the movable section 110 is slid and then rotated). That is to say, the MR sensor 116 is not opposite to the magnet 125a or 125b, but the contact pad 114a or 114b is opposite to the contact pad 123.

In addition, the connection established in the above step S18 may not be interrupted immediately. For example, the connection established for sending or receiving a control command may be used for sending or receiving a key operation signal. Conversely, if connection has already been established, it is not necessary to establish new connection in step S18. However, a reduction in time for which connection is maintained reduces consumption of electric power.

With the portable telephone 100 according to the second embodiment, as has been described in the foregoing, a method for performing communication between the movable section 110 and the main section 120 is controlled properly according to the modified forms of the movable section 110 and it is possible to prevent radio waves from reaching an unnecessary area. Accordingly, the risk of leakage of the contents of communication or the possibility of interference on other electronic devices can be avoided. Furthermore, by adopting contact communication, communication between the movable section 110 and the main section 120 can be performed stably. Such contact communication is useful in the case where it is especially necessary to avoid failure in communication, such as where a control command is issued for testing an operating state or where a control program is rewritten.

### (Third Embodiment)

A third embodiment will now be described. The following description will center on the differences between the above second embodiment and a third embodiment and the same matters will be omitted. A portable telephone according to a third embodiment employs a directional radio communication method in place of a communication method via a contact as a method for performing communication between a movable section and a main section.

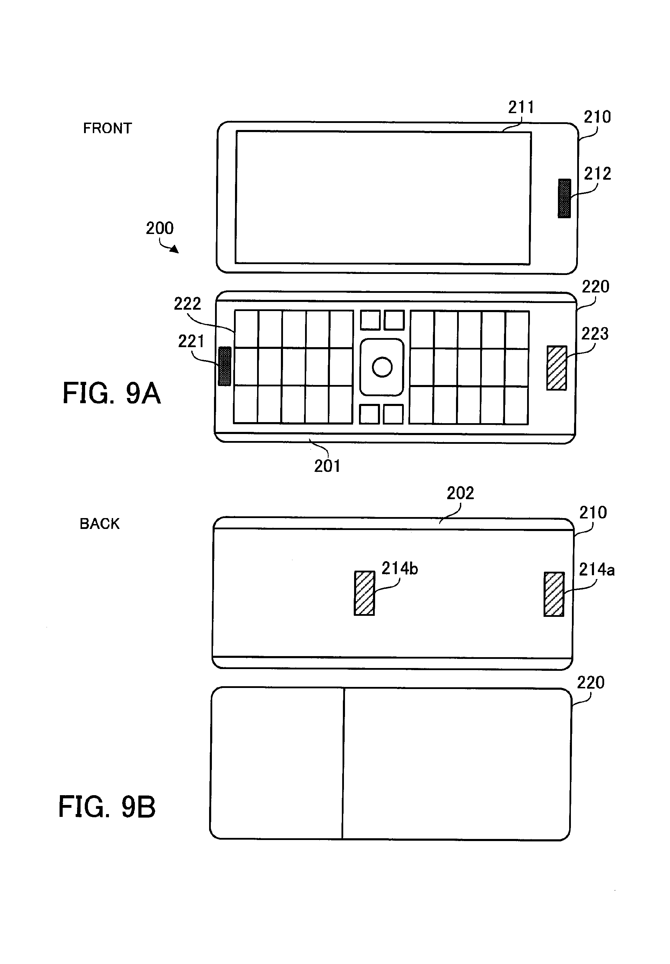

FIGS. 9A and 9B illustrate the appearance of a portable telephone according to a third embodiment which is in a separated state. A portable telephone 200 according to a third embodiment includes a movable section 210 and a main section 220. The movable section 210 corresponds to the movable section 110 of the portable telephone 100 according to the second embodiment and the main section 220 corresponds to the main section 120 of the portable telephone 100 according to the second embodiment. The movable section 210 has a display 211 and a speaker 212 on the front. In addition, the movable section 210 has frame portions 202 on the back. The main section 220 has guide rail portions 201, a microphone 221, and a keypad 222 on the front.

Moreover, the movable section 210 has infrared communication units 214a and 214b on the back. To perform infrared communication (that is to say, noncontact communication and directional radio communication) with the main section 220, the infrared communication units 214a and 214b are exposed on the back of the movable section 210 and have infrared ports through which infrared rays pass. The infrared communication unit 214a is placed in an edge portion near the top (right side in FIG. 9A) and the infrared communication unit 214b is placed near the middle of the length of the movable section 210.

The main section 220 also has an infrared communication unit 223 on the front. To perform infrared communication with the movable section 210, the infrared communication unit 223 is exposed on the front of the main section 220 and has an infrared port through which infrared rays pass. The infrared communication unit 223 is placed in an edge portion near the top.

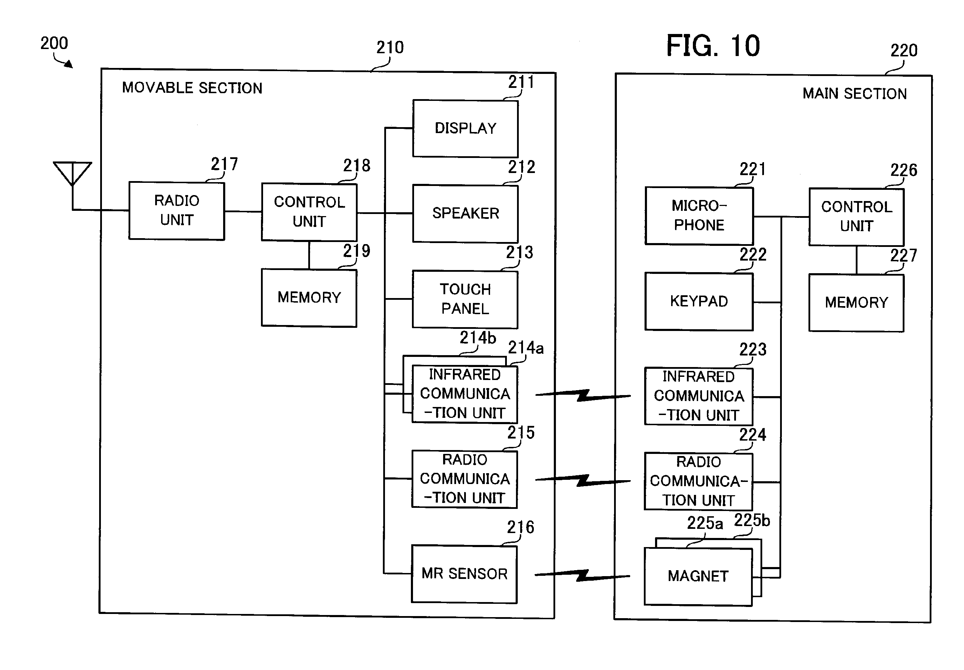

FIG. 10 is a block diagram of hardware which makes up the portable telephone according to the third embodiment. Infrared communication or nondirectional radio communication can be performed between the movable section 210 and the main section 220.

In addition to the above display 211, speaker 212, and infrared communication units 214a and 214b, the movable section 210 has a touch panel 213, a radio communication unit 215, an MR sensor 216, a radio unit 217, a control unit 218, and a memory 219. The functions of these modules other than the infrared communication units 214a and 214b are the same as those of the modules of the portable telephone 100 which are illustrated in FIG. 5 and which have the same names.

The infrared communication unit 214a or 214b performs communication with the main section 220 by an infrared communication method which is a directional radio communication method. The infrared communication units 214a and 214b are placed at different positions on the back of the movable section 210 so that communication can be performed both in the housed state and in the slid state. When the infrared communication unit 214a or 214b is opposite to the infrared communication unit 223, the infrared communication unit 214a or 214b performs communication under the control of the control unit 218.

In addition to the above microphone 221, keypad 222, and infrared communication unit 223, the main section 220 has a radio communication unit 224, magnets 225a and 225b, a control unit 226, and a memory 227. The functions of these modules other than the infrared communication unit 223 are the same as those of the modules of the portable telephone 100 in FIG. 5 and which have the same names.

The infrared communication unit 223 performs communication with the movable section 210 by the infrared communication method. When the infrared communication unit 223 is opposite to the infrared communication unit 214a or 214b, the infrared communication unit 223 performs communication under the control of the control unit 226.

In the above description the movable section 210 and the main section 220 employ the infrared communication method. However, the movable section 210 and the main section 220 may employ a directional radio communication method other than the infrared communication method. For example, the movable section 210 and the main section 220 may employ the RFID communication method.

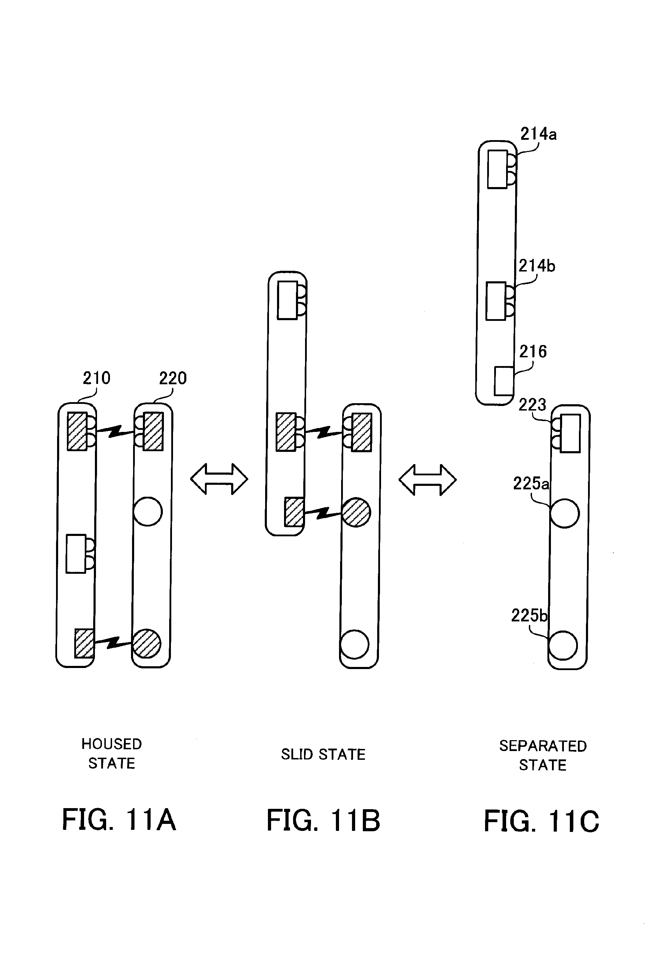

FIGS. 11A, 11B and 11C illustrate a change in the state of the portable telephone according to the third embodiment. FIGS. 11A, 11B and 11C illustrate the state of the portable telephone 200 as seen from the right side (lower side in FIG. 9A).

In the housed state (FIG. 11A) the infrared communication unit 214a faces the infrared communication unit 223. Accordingly, one of them detects an infrared signal sent from the other and vice versa, and infrared communication can be performed. In the slid state (FIG. 11B) the infrared communication unit 214b faces the infrared communication unit 223. Accordingly, one of them detects an infrared signal sent from the other and vise versa, and infrared communication can be performed. In the separated state (FIG. 11C) neither the infrared communication unit 214a nor 214b is opposite to the infrared communication unit 223. Accordingly, infrared communication is not performed.

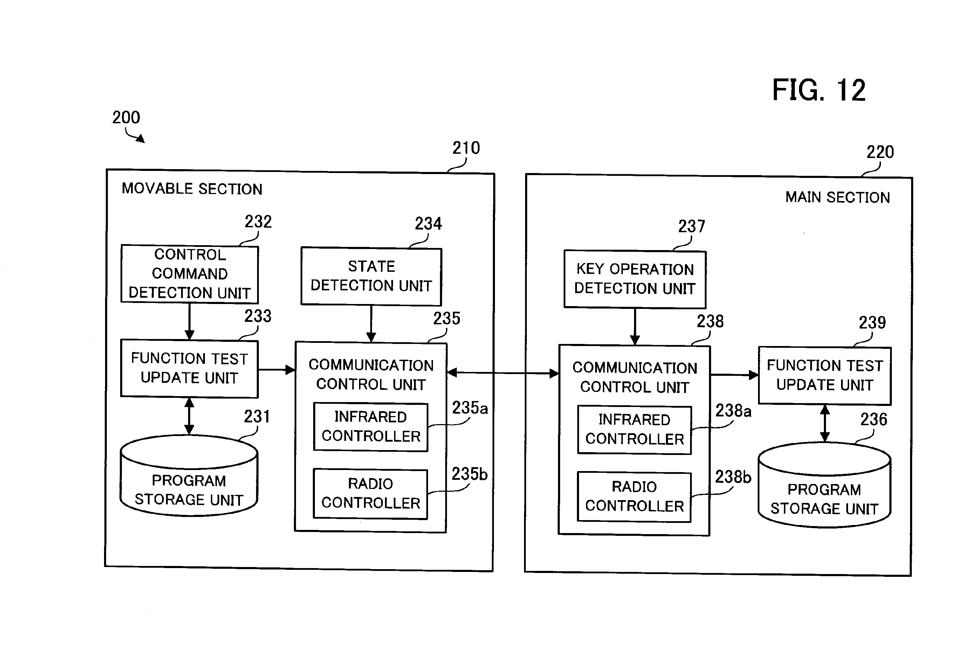

FIG. 12 is a block diagram of the functions of the portable telephone according to the third embodiment. Each of the movable section 210 and the main section 220 executes a program. By doing so, the functions illustrated in FIG. 12 are realized in the portable telephone 200. However, all or part of these functions can be realized by dedicated hardware circuits.

The control unit 218 executes a program stored in the memory 219. By doing so, a program storage unit 231, a control command detection unit 232, a function test update unit 233, a state detection unit 234, and a communication control unit 235 are realized in the movable section 210. The functions of these modules other than the communication control unit 235 are the same as those of the modules of the portable telephone 100 which are illustrated in FIG. 7 and which have the same names.

The communication control unit 235 controls communication with the main section 220. When a communication event occurs, the communication control unit 235 refers to the present state of the movable section 210 and selects one of infrared communication and nondirectional radio communication. To be concrete, if a determined kind of communication which requires stability is performed, then the communication control unit 235 selects infrared communication preferentially. On the other hand, if another kind of communication is performed, then the communication control unit 235 selects nondirectional radio communication.

The communication control unit 235 includes an infrared controller 235a and a radio controller 235b. The infrared controller 235a controls infrared communication. The infrared controller 235a checks whether infrared communication can be performed via the infrared communication unit 214a (such as whether the infrared communication unit 214a receives a known signal or whether a receiving level in the infrared communication unit 214a exceeds a threshold), checks whether infrared communication can be performed via the infrared communication unit 214b (such as whether the infrared communication unit 214b receives a known signal or whether a receiving level in the infrared communication unit 214b exceeds a threshold), and uses one of them via which infrared communication can be performed. The radio controller 235b controls nondirectional radio communication.

The control unit 226 executes a program stored in the memory 227. By doing so, a program storage unit 236, a key operation detection unit 237, a communication control unit 238, and a function test update unit 239 are realized in the main section 220. The functions of these modules other than the communication control unit 238 are the same as those of the modules of the portable telephone 100 which are illustrated in FIG. 7 and which have the same names.

The communication control unit 238 controls communication with the movable section 210. When a communication event occurs, the communication control unit 238 selects one of infrared communication and nondirectional radio communication. To be concrete, when the movable section 210 requires to establish connection, the communication control unit 238 selects a communication method used at that time. When the main section 220 begins communication, the communication control unit 238 selects nondirectional radio communication. However, if connection by infrared communication has already been established or if the communication control unit 238 can recognize that the movable section 210 is in the housed or slid state, then the communication control unit 238 may select infrared communication.

The communication control unit 238 includes an infrared controller 238a and a radio controller 238b. The infrared controller 238a controls infrared communication. The radio controller 238b controls nondirectional radio communication.

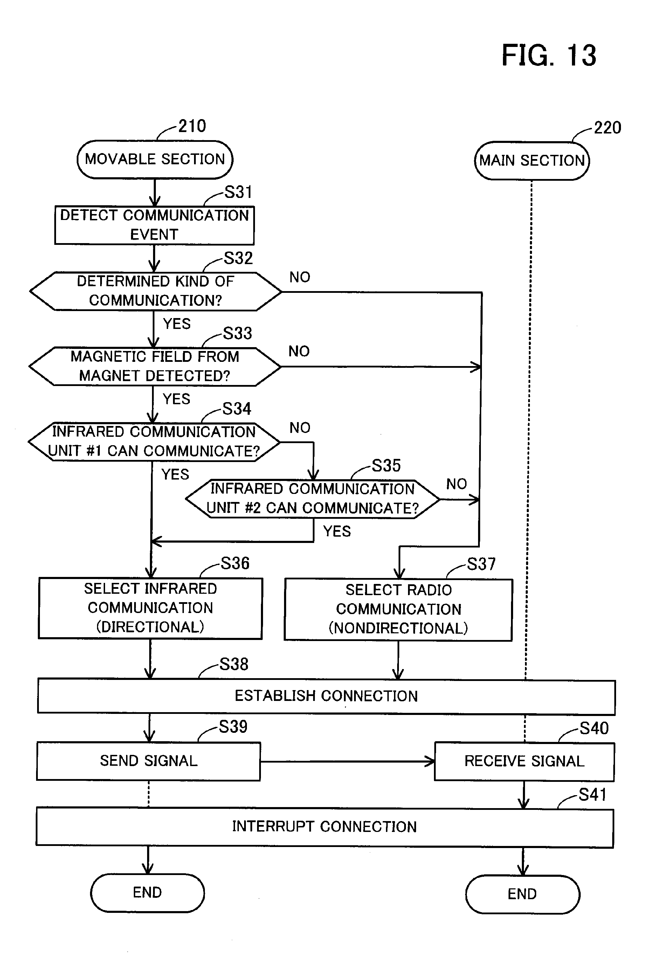

FIG. 13 is a flow chart of communication control exercised by the portable telephone according to the third embodiment. A control process illustrated in FIG. 13 will now be described in order of step number.

(Step S31) The communication control unit 235 detects an event which gives an opportunity to begin communication.

(Step S32) The communication control unit 235 determines whether communication caused by the communication event detected in step S31 is a determined kind of communication which requires stability. The determined kind of communication includes sending a control command or a control program. If the communication caused by the communication event detected in step S31 is the determined kind of communication, then step S33 is performed next. If the communication caused by the communication event detected in step S31 is another kind of communication, then step S37 is performed next.

(Step S33) The state detection unit 234 determines whether a magnetic field from the magnet 225a or 225b is detected by the MR sensor 216. If a magnetic field from the magnet 225a or 225b is detected by the MR sensor 216, then step S34 is performed next. If a magnetic field from the magnet 225a or 225b is not detected by the MR sensor 216, then the state detection unit 234 determines that the movable section 210 is in the separated state. In this case, step S37 is performed next.

(Step S34) The state detection unit 234 determines whether the infrared communication unit 214a can communicate with the infrared communication unit 223 (for example, whether the level of an infrared signal detected enables communication). If the infrared communication unit 214a can communicate with the infrared communication unit 223, then the state detection unit 234 determines that the movable section 210 is in the housed state. In this case, step S36 is performed next. If not, then step S35 is performed next.

(Step S35) The state detection unit 234 determines whether the infrared communication unit 214b can communicate with the infrared communication unit 223 (for example, whether the level of an infrared signal detected enables communication). If the infrared communication unit 214b can communicate with the infrared communication unit 223, then the state detection unit 234 determines that the movable section 210 is in the slid state. In this case, step S36 is performed next. Otherwise, step S37 is performed next.

(Step S36) If the state detection unit 234 determines in step S34 that the movable section 210 is in the housed state, then the communication control unit 235 selects infrared communication via the infrared communication unit 214a. If the state detection unit 234 determines in step S35 that the movable section 210 is in the slid state, then the communication control unit 235 selects infrared communication via the infrared communication unit 214b. Step S38 is performed next.

(Step S37) The communication control unit 235 selects nondirectional radio communication via the radio communication unit 215. Step S38 is performed next.

(Step S38) The communication control unit 235 exercises control so that connection is established. If infrared communication is selected in step S36, then the infrared controllers 235a and 238a do a procedure for establishing the connection. If nondirectional radio communication is selected in step S37, then the radio controllers 235b and 238b do a procedure for establishing the connection.

(Step S39) The communication control unit 235 begins communication by the use of the connection established in step S38.

(Step S40) The communication control unit 238 begins communication by the use of the connection established in step S38.

(Step S41) When the communication ends (or when communication is not performed for a certain period of time), the communication control unit 235 exercises control so that the connection established in step S38 is interrupted. If infrared communication is selected, then the infrared controllers 235a and 238a do a procedure for interrupting the connection. If nondirectional radio communication is selected, then the radio controllers 235b and 238b do a procedure for interrupting the connection.

As has been described, if the movable section 210 is in the housed or slid state and the determined kind of communication is performed, then the movable section 210 selects infrared communication. On the other hand, if the movable section 210 is in the separated state or another kind of communication is performed, then the movable section 210 selects nondirectional radio communication.

In the above description nondirectional radio communication is performed in the case of NO in step S33 or S35. In this case, however, communication may not be performed. The above steps S34 and S35 may be performed simultaneously. Even in the case of NO in the above step S33, the state detection unit 234 may check whether communication can be performed via the infrared communication unit 214a or 214b. The connection established in the above step S38 may not be interrupted immediately. Conversely, if connection has already been established, it is not necessary to establish new connection in step S38.

With the portable telephone 200 according to the third embodiment, as has been described in the foregoing, infrared communication or nondirectional radio communication is selected properly according to the modified forms of the movable section 210. As a result, it is possible to prevent radio waves from reaching an unnecessary area. Furthermore, by adopting infrared communication, communication between the movable section 210 and the main section 220 can be performed stably.

### (Fourth Embodiment)

A fourth embodiment will now be described. The following description will center on the differences between the above second embodiment and a fourth embodiment and the same matters will be omitted. A portable telephone according to a fourth embodiment differs from the portable telephone 100 according to the second embodiment in structure in which a movable section can be slid on a main section.

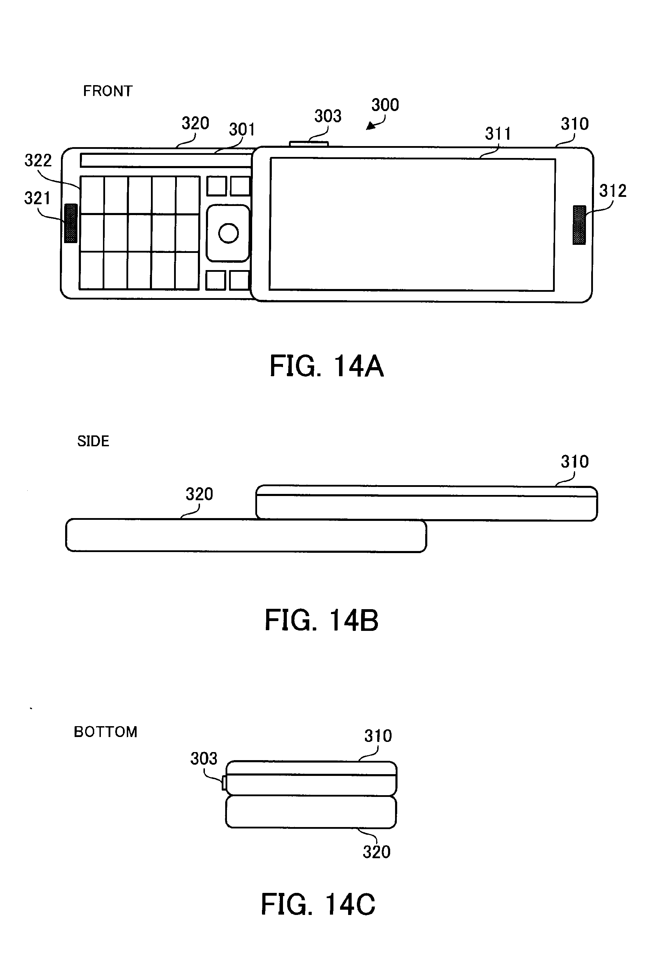

FIGS. 14A, 14B, and 14C illustrate the appearance of a portable telephone according to a fourth embodiment. A portable telephone 300 according to a fourth embodiment includes a movable section 310 and a main section 320. The movable section 310 corresponds to the movable section 110 of the portable telephone 100 according to the second embodiment and the main section 320 corresponds to the main section 120 in the second embodiment. The movable section 310 has a display 311 and a speaker 312 on the front. The main section 320 has a microphone 321 and a keypad 322 on the front.

The movable section 310 can be slid along the length of the main section 320. The movable section 310 slides, so the main section 320 has a concave guide rail portion 301 on the front. The guide rail portion 301 is formed near the left side (upper side in FIG. 14A) in the sliding direction. However, the guide rail portion 301 may be formed near the right side (lower side in FIG. 14A). In addition, the movable section 310 has a button 303. The button 303 is placed at a position on the left side near the bottom (left side in FIG. 14A).

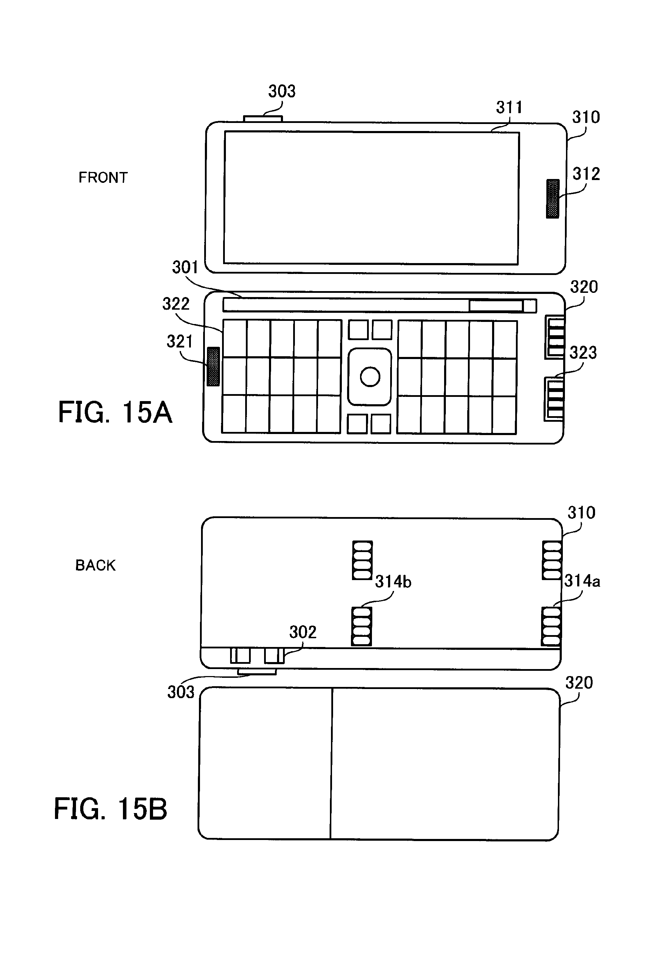

FIGS. 15A and 15B illustrate the appearance of the portable telephone according to the fourth embodiment which is in a separated state. A user can change the portable telephone 300 from a slid state illustrated in FIGS. 14A, 14B, and 14C to a separated state by separating the movable section 310 from the main section 320 while pressing down the button 303. The movable section 310 has contact pads 314a and 314b on the back. The main section 320 has a contact pad 323 on the front.

In addition, the movable section 310 has a hook portion 302 on the back. The hook portion 302 is formed near the left side (upper side in FIG. 15A) and the button 303. While the button 303 is being pressed down, the hook portion 302 is open. While the button 303 is not being pressed down, the hook portion 302 is closed. A slider placed in the guide rail portion 301 can be pinched in the hook portion 302. That is to say, the user makes the slider and the hook portion 302 face each other, while pressing down the button 303. The user then releases his/her finger on the button 303. By doing so, the movable section 310 and the main section 320 can be joined. The slider slides in the guide rail portion 301.

In the example illustrated in FIGS. 14A, 14B, and 14C, the movable section 310 can be slid along its length. However, the movable section 310 may be slid along its width. In this case, a guide rail portion and a hook portion should be formed near the bottom (left side in FIG. 14A) or the top (right side in FIG. 14A). In addition, the movable section 310 may be slid both along its length and along its width. In this case, a guide rail portion and a hook portion necessary for sliding the movable section 310 along its length and a guide rail portion and a hook portion necessary for sliding the movable section 310 along its width should be formed.

With the portable telephone 300 according to the fourth embodiment, as has been described in the foregoing, the structure in which the movable section 310 can be slid on the main section 320 and in which the movable section 310 can be separated from the main section 320 can be adopted. This is the same with the portable telephone 100 according to the second embodiment. Like the portable telephone 200 according to the third embodiment, directional radio communication (such as infrared communication) may be performed between the movable section 310 and the main section 320.

### (Fifth Embodiment)

A fifth embodiment will now be described. The following description will center on the differences between the above second embodiment and a fifth embodiment and the same matters will be omitted. With a portable telephone according to a fifth embodiment a main section performs the function of controlling the whole of the portable telephone in place of a movable section.

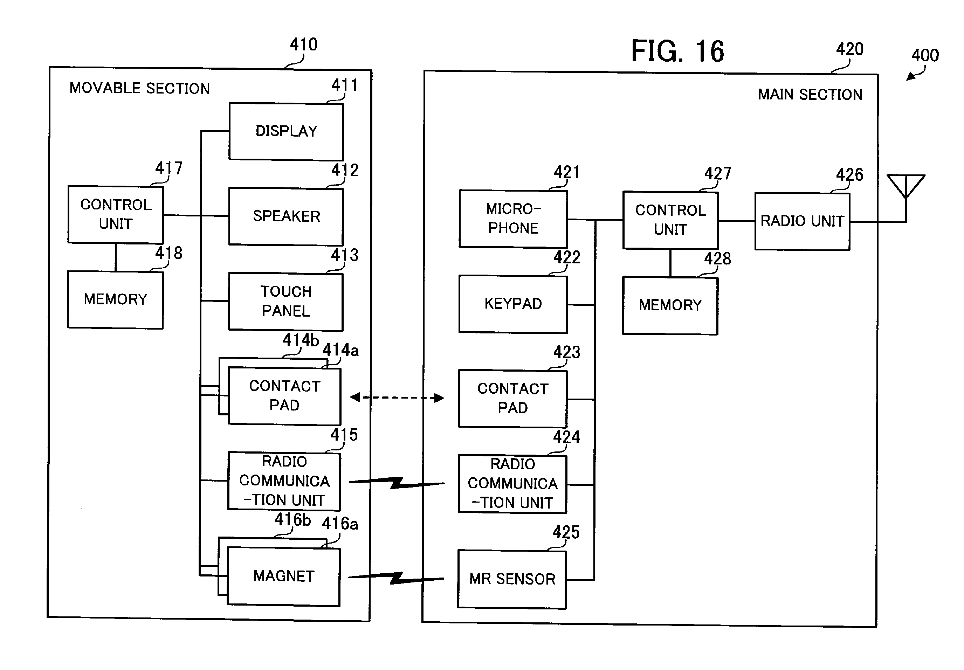

FIG. 16 is a block diagram of hardware which makes up a portable telephone according to a fifth embodiment. A portable telephone 400 according to a fifth embodiment includes a movable section 410 and a main section 420. The movable section 410 corresponds to the movable section 110 of the portable telephone 100 according to the second embodiment and the main section 420 corresponds to the main section 120 of the portable telephone 100 according to the second embodiment.

The movable section 410 has a display 411, a speaker 412, a touch panel 413, contact pads 414a and 414b, a radio communication unit 415, magnets 416a and 416b, a control unit 417, and a memory 418. The functions of these modules are the same as those of the display 111, the speaker 112, the touch panel 113, the contact pads 114a and 114b, the radio communication unit 115, the magnets 125a and 125b, the control unit 126, and the memory 127, respectively, of the portable telephone 100 according to the second embodiment.

The main section 420 has a microphone 421, a keypad 422, a contact pad 423, a radio communication unit 424, an MR sensor 425, a radio unit 426, a control unit 427, and a memory 428. The functions of these modules are the same as those of the microphone 121, the keypad 122, the contact pad 123, the radio communication unit 124, the MR sensor 116, the radio unit 117, the control unit 118, and the memory 119, respectively, of the portable telephone 100 according to the second embodiment.

The main section 420 performs the function of communicating with the radio base station 20 and a main control function. That is to say, the control unit 417 controls the operation of the movable section 410 under the control of the control unit 427. The control unit 417 detects the touching state of the contact pad 114a or 114b and informs the control unit 417 about it by, for example, nondirectional radio communication. On the other hand, the control unit 427 controls the whole of the portable telephone 400. The control unit 427 determines the state of the movable section 410 (whether the movable section 410 is in a housed state, a slid state, or a separated state) on the basis of the touching state and a state in which a magnetic field is detected, and controls communication.

The control unit 417 may not be equal in processing capability to the control unit 427. For example, the operation capability of a CPU of the control unit 417 may be below that of a CPU of the control unit 427. In addition, as illustrated in FIG. 16, the movable section 410 has the two contact pads 414a and 414b and the main section 420 has the one contact pad 423. However, the movable section 410 and the main section 420 may have one contact pad and two contact pads respectively. In addition, the movable section 410 has the two magnets 416a and 416b and the main section 420 has the MR sensor 425. Conversely, however, the movable section 410 and the main section 420 may have an MR sensor and two magnets respectively. Moreover, like the portable telephone 200 according to the third embodiment, directional radio communication (such as infrared communication) may be performed between the movable section 410 and the main section 420.

With the portable telephone 400 according to the fifth embodiment, as has been described in the foregoing, a communication method can be selected properly according to the state of the movable section 410. This is the same with the portable telephone 100 according to the second embodiment.

### (Sixth Embodiment)

A sixth embodiment will now be described. The following description will center on the differences between the above second embodiment and a sixth embodiment and the same matters will be omitted. With a portable telephone according to a sixth embodiment distinctions can be made between a housed state, a slid state, and a separated state only by the use of an MR sensor.

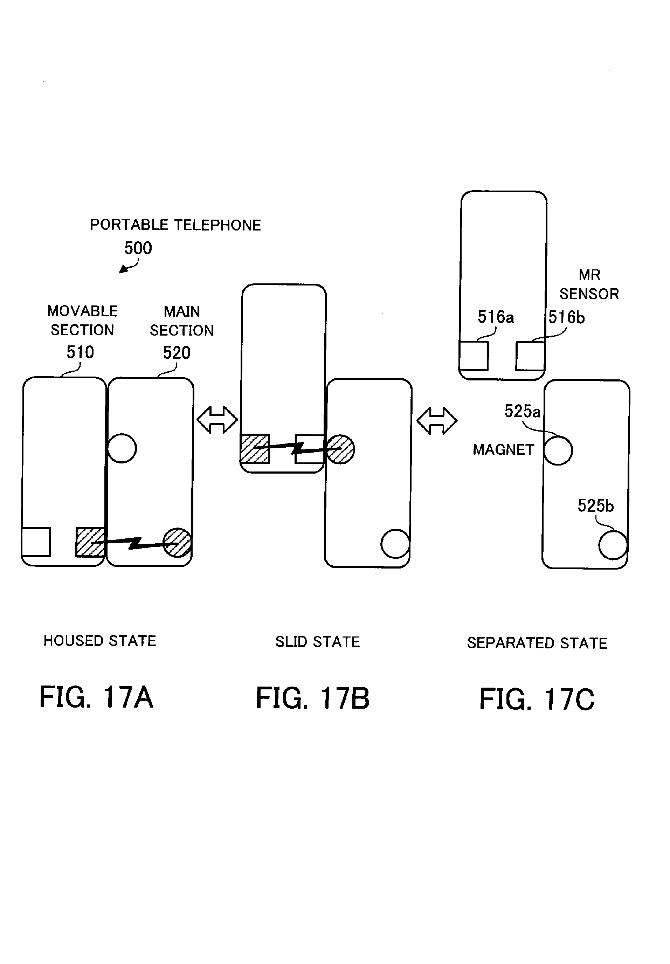

FIGS. 17A, 17B, and 17C illustrate a method for detecting the state of a portable telephone according to a sixth embodiment. A portable telephone 500 according to a sixth embodiment includes a movable section 510 and a main section 520. The movable section 510 corresponds to the movable section 110 of the portable telephone 100 according to the second embodiment and the main section 520 corresponds to the main section 120 of the portable telephone 100 according to the second embodiment. In FIGS. 17A, 17B, and 17C, the movable section 510 and the main section 520 are seen from the front. In FIGS. 17A, 17B, and 17C the movable section 510 and the main section 520 are illustrated side by side, but in reality the movable section 510 and the main section 520 overlap.

The movable section 510 has an MR sensor 516a at a position near the left side (left side in FIGS. 17A, 17B, and 17C) and the bottom and has an MR sensor 516b at a position near the right side (right side in FIGS. 17A, 17B, and 17C) and the bottom. The main section 520 has a magnet 525a at a position near the left side and the middle of the length and has a magnet 525b at a position near the right side and the bottom.

In the housed state (FIG. 17A) the MR sensor 516b faces the magnet 525b. As a result, the MR sensor 516b detects a magnetic field. In the slid state (FIG. 17B) the MR sensor 516a is facing the magnet 525a. As a result, the MR sensor 516a detects a magnetic field. In the separated state (FIG. 17C), the MR sensor 516a is not facing the magnet 525a or 525b and the MR sensor 516b is not facing the magnet 525a or 525b. Therefore, the MR sensor 516a or 516b does not detect a magnetic field.

As a result, the movable section 510 can make distinctions between the housed state, the slid state, and the separated state and detect each state. That is to say, if the MR sensor 516a does not detect a magnetic field and the MR sensor 516b detects a magnetic field, then the movable section 510 can determine that it is in the housed state. If the MR sensor 516a detects a magnetic field and the MR sensor 516b does not detect a magnetic field, then the movable section 510 can determine that it is in the slid state. If neither the MR sensor 516a nor the MR sensor 516b detects a magnetic field, then the movable section 510 can determine that it is in the separated state.

The two MR sensors 516a and 516b may be arranged along the length of the movable section 510 and the two magnets 525a and 525b may be arranged along the length of the main section 520. Even in this case, the movable section 510 can make distinctions between the housed state, the slid state, and the separated state and detect each state.

With the portable telephone 500 according to the sixth embodiment, as has been described in the foregoing, it is possible to specify the state of the movable section 510 and to select a communication method properly. This is the same with the portable telephone 100 according to the second embodiment. In this case, it is possible to make distinctions between the housed state, the slid state, and the separated state by detecting a magnetic field. It is not necessary to check whether contact communication can be performed. Accordingly, the effect of an improvement in the speed of state specification or a reduction in electric power consumed by communication can be anticipated. Like the portable telephone 200 according to the third embodiment, directional radio communication (such as infrared communication) may be performed between the movable section 510 and the main section 520.

The concepts of the above third through sixth embodiments can be combined arbitrarily.

According to the above portable terminal apparatus, communication control method and communication control program, communication between the enclosures can be controlled properly.

All examples and conditional language recited herein are intended for pedagogical purposes to aid the reader in understanding the invention and the concepts contributed by the inventor to furthering the art, and are to be construed as being without limitation to such specifically recited examples and conditions, nor does the organization of such examples in the specification relate to a showing of the superiority and inferiority of the invention. Although the embodiment(s) of the present invention has(have) been described in detail, it should be understood that various changes, substitutions, and alterations could be made hereto without departing from the scope of the claims.

## Claims

1. A portable terminal apparatus comprising:
a first enclosure;
a second enclosure arranged to assume any one of a plurality of configurations including a first form and a second form, the second enclosure being closed over the first enclosure in the case of the first form, the second enclosure being separated from the first enclosure in the case of the second form; and
a control unit which is arranged to control, in the case of the first form, communication to be performed between the first enclosure and the second enclosure via a contact between the first enclosure and the second enclosure and, in the case of the second form, communication to be performed between the first enclosure and the second enclosure by a radio communication unit.

2. The portable terminal apparatus according to claim 1, wherein:
the configurations which the second enclosure takes further include a third form where the second enclosure is slid on the first enclosure from the first form; and
the control unit controls, in the case of the third form, communication to be performed between the first enclosure and the second enclosure via the contact between the first enclosure and the second enclosure.

3. The portable terminal apparatus according to claim 2, wherein:
the first enclosure has a first connection terminal for communicating with the second enclosure, and the second enclosure has a second connection terminal and a third connection terminal for communicating with the first enclosure; and
the first connection terminal touches the second connection terminal in the case of the first form and the first connection terminal touches the third connection terminal in the case of the third form.

4. The portable terminal apparatus according to any preceding claim, wherein the control unit controls, even in the case of the first form, a determined kind of communication to be performed between the first enclosure and the second enclosure by the radio communication unit.

5. The portable terminal apparatus according to any preceding claim, wherein:
the first enclosure has a magnetic material and the second enclosure has a magnetic sensor; and
the control unit determines, according to a situation in which the magnetic sensor detects the magnetic material, whether the first enclosure and the second enclosure are separated.

6. A method for controlling communication in a portable terminal apparatus including a first enclosure and a second enclosure, the method comprising:
detecting whether the second enclosure takes a first form in which the second enclosure is closed over the first enclosure or a second form in which the second enclosure is separated from the first enclosure; and
performing, in the case of the first form, communication between the first enclosure and the second enclosure via a contact between the first enclosure and the second enclosure and performing, in the case of the second form, communication between the first enclosure and the second enclosure by a radio communication unit.

7. A computer program which, when executed by a computer which controls a portable terminal apparatus including a first enclosure and a second enclosure, causes the computer to perform a process comprising:
detecting whether the second enclosure takes a first form in which the second enclosure is closed over the first enclosure or a second form in which the second enclosure is separated from the first enclosure; and
controlling, in the case of the first form, communication to be performed between the first enclosure and the second enclosure via a contact between the first enclosure and the second enclosure and, in the case of the second form, communication to be performed between the first enclosure and the second enclosure by a radio communication unit.

8. A computer-readable medium on which is recorded the program according to claim 7.
